# EUROPEAN PATENT SPECIFICATION

(11) **EP 0 755 542 B1**
(45) Date of publication and mention of the grant of the patent: **20.09.2000**
(21) Application number: 95916997.0
(22) Date of filing: 13.04.1995
(51) Int. Cl.: G06F 13/00, G06F 3/12

(54) **HIGH SPEED DATA TRANSMISSION SYSTEM USING AN ENHANCED TRANSFER METHOD**
HOCHGESCHWINDIGKEITSDATENÜBERTRAGUNGSSYSTEM WELCHES EIN VERBESSERTES ÜBERTRAGUNGSVERFAHREN VERWENDET
SYSTEME DE TRANSMISSION A GRANDE VITESSE UTILISANT UN PROCEDE DE TRANSFERT AMELIORE

(30) Priority: 13.04.1994 US 226937
(43) Date of publication of application: 29.01.1997
(73) Proprietor: Hewlett-Packard Company, Palo Alto, California 94304 (US)
(72) Inventor: FRAZIER, Alan, L., Wichita, KS 67230 (US)
(74) Representative: Hallam, Arnold Vincent
(86) International application number: US9504652
(87) International publication number: WO9528679

(56) References cited:
- US-A- 4 672 186
- US-A- 5 239 627

## Description

### BACKGROUND OF THE INVENTION

### Field of the Invention

The present invention generally relates to the art of electronic computers, and more specifically to a high speed data transmission system which transmits data from a computer to a peripheral device such as a printer at high speed using an Enhanced Transfer Method (ETM).

### Description of the Related Art

A computer system for personal or business use generally includes a peripheral device in the form of a printer for producing hard copy documents.

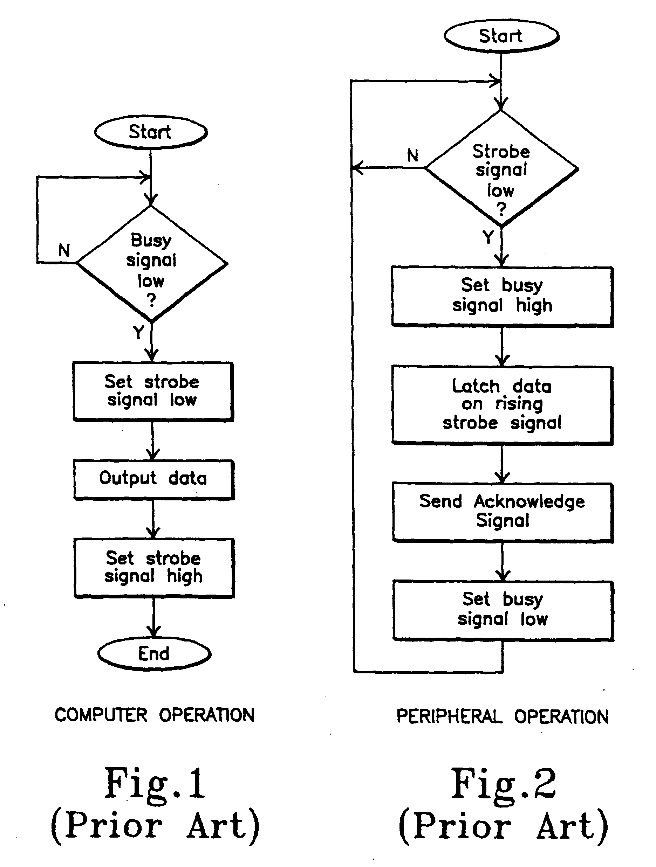

FIGs. 1 and 2 illustrate a conventional method of transmitting data from a computer to a printer in parallel form. FIG. 1 illustrates the operations performed by the computer, whereas FIG. 2 illustrates the operations performed by the printer.

The computer determines the availability of the printer to receive a data element in the form of a parallel byte by polling a BUSY signal line. If the printer is busy, it generates a logically high BUSY signal and the computer will not attempt to transmit data to the printer.

If the printer is available, it generates a logically low signal on the BUSY line. The computer then transmits a byte to the printer by setting a STROBE line low, outputting the data byte to an output latch and then setting the STROBE line high.

The printer polls the STROBE line. If the STROBE signal is high, the printer will not attempt to input a byte from the computer. When the strobe signal goes low, the printer sets the BUSY signal high, latches in the data byte, generates an ACKNOWLEDGE signal and then sets the BUSY signal low.

The conventional method uses four program instructions or input/output (I/O) calls to output one byte of data. A first instruction (IN) is required to poll the BUSY line, a second instruction (OUT) sets the STROBE line low, a third instruction (OUT) outputs the data to the latch and a fourth instruction (OUT) sets the STROBE line high.

The requirement of four instructions, one IN instruction and three OUT instructions, to output a single data byte inherently limits the speed or rate at which data is transmitted from the computer to the printer. For example, the data transmission rate for a standard parallel port of an Intel 486 computer system operating at a clock speed of 33 MHz is approximately 60 to 100 kilobytes per second.

A parallel port is a very convenient means for connecting a peripheral device. Various devices, for example tape data backup drives, CD ROM drives, telecommunications adapters such as modems, and network adapters such as Ethernet can be driven from parallel ports, but the data transfer rate is too slow using the conventional method for practical applications. There exists in the art a need for an improved parallel data transfer method that will enable peripheral devices such as these to be driven from a standard parallel port.

### SUMMARY OF THE INVENTION

It is an object of the present invention to provide a data transmission system which is capable of operation at substantially higher data transmission rates than those which are achievable in the prior art using an Enhanced Transfer Method (ETM).

A data transmission system in accordance with the present invention is set forth in the appended claims.

In accordance with a high speed data transmission system using the present method, the adaptor processes and transfers data from a computer to a printer. The data is divided by the computer into blocks of non-repeated (different) and repeated (identical) data elements.

The adaptor receives the blocks of non-repeated data elements from the computer and re-transmits them to the printer without alteration.

Rather than transmitting a block of repeated data elements per se, the computer transmits a number of alternating high and low strobe signals that are equal to the number of repeated data elements in the block. The first repeated data element is latched by the adaptor, and then repeatedly transmitted to the printer in response to each respective alternating strobe signal.

The adaptor thereby transmits a data element to the printer in response to sensing a received data element that is different from the previous received data element, or in response to a received strobe signal that is different from a previous received strobe signal.

The computer requires only one program instruction to output a non-repeated data element or an alternating strobe signal, as compared to four instructions in the prior art. This enables the data transmission rate for an Intel 486 computer system implementing the present method to be increased from the prior art value of 60 to 100 kilobytes per second to approximately 1,000 kilobytes per second.

The present invention enables tape data backup drives, CD ROM drives, telecommunications adapters such as modems, and network adapters such as Ethernet to be driven from a standard parallel port at a speed that is sufficiently high for practical applications.

The above and other objects, features and advantages of the present invention will become apparent to those skilled in the art from the following detailed description taken with the accompanying drawings, in which like reference numerals refer to like parts.

### DESCRIPTION OF THE DRAWINGS

FIGs. 1 and 2 are flowcharts illustrating a prior art method of transmitting data from a computer to a printer;
FIG. 3 is a simplified block diagram illustrating a high speed data transmission system according to the present invention;
FIG. 4 is a diagram illustrating a data port arrangement of the present system;
FIG. 5 is an electrical schematic diagram illustrating a data adaptor of the system;
FIG. 6 is a flowchart illustrating the operation of the present data transmission system; and
FIG. 7 is a timing diagram for further illustrating the operation of the system.

### DETAILED DESCRIPTION OF THE INVENTION

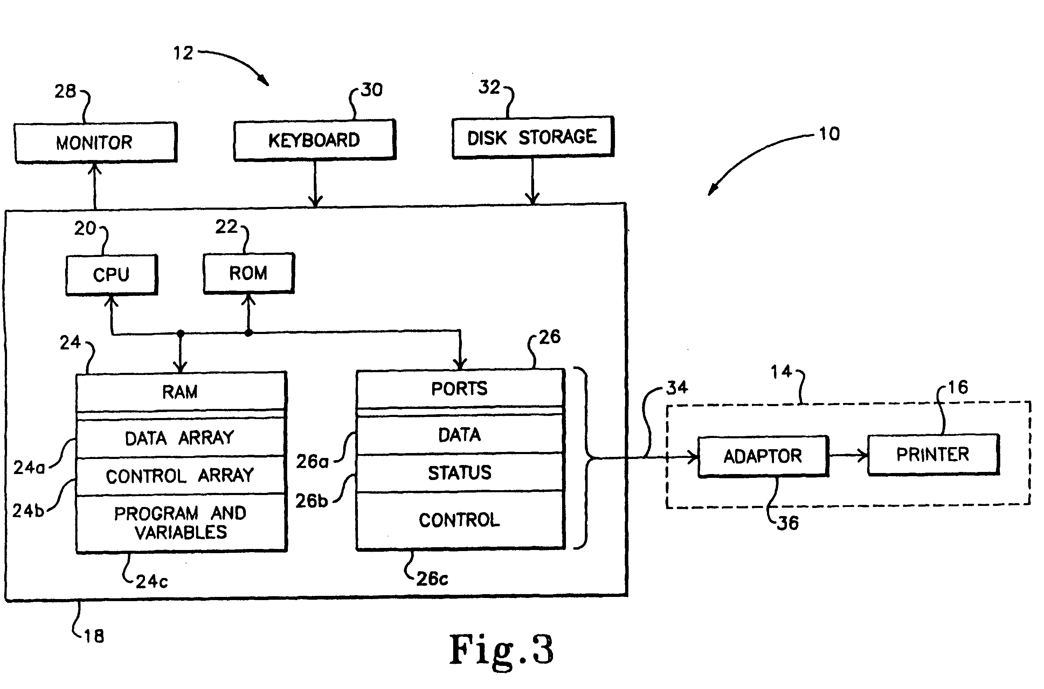

A high speed data transmission system 10 utilizing an Enhanced Transfer Method (ETM) of data transmission according to the present invention is illustrated in Fig. 3. The system 10 generally comprises a transmitter in the form of a personal computer 12, and a receiver in the form of a peripheral device 14. The present system 10 is especially suited to an application in which the peripheral device 14 comprises a printer 16, although the invention is not so limited.

The computer 12 comprises a motherboard 18, including a Central Processing Unit (CPU) 20, a Read Only Memory (ROM) 22, a Random Access Memory (RAM) 24 and a parallel data Input/Output (I/O) unit 26 having a data port 26a, a status port 26b and a control port 26c.

The computer 12 further comprises a monitor 28 for displaying data being processed, a keyboard 30 for data input and a disk storage 32 including a hard disk drive and/or a floppy disk drive. The CPU 20 is typically an Intel 486 microprocessor, although the invention is not limited to any particular configuration.

The RAM 24 is divided, under control of an operating program, into a data array 24a and a control array 24b. The remainder of the RAM 24 constitutes a main area 24c for storing program instructions, data and variables.

The sizes of the data array 24a and the control array 24b are selected in accordance with a particular application. A suitable size of the data array 24a for operation with an Intel 486 microprocessor system has been found to be approximately 1 megabyte, whereas the control array 24b will typically have a size of 2 kilobytes.

The computer 12 transmits data in parallel form through the I/O unit 26 and a communications cable 34 to the peripheral device 14. In accordance with the present invention, the device 14 includes an adaptor 36 which is connected between the cable 34 and the printer 16.

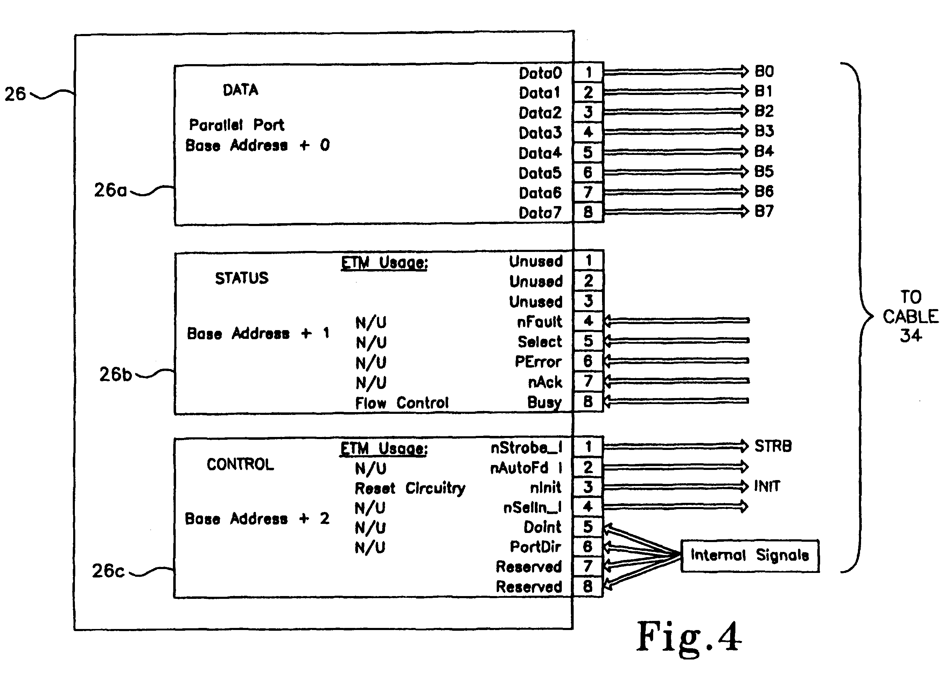

The I/O unit 26 is illustrated in FIG. 4. The data port 26a is accessed by writing to a BASE ADDRESS, whereas the status port 26b is accessed by writing to the BASE ADDRESS + 1 and the control port is accessed by writing to the BASE ADDRESS + 2.

Each data element that is transmitted from the computer 12 to the peripheral unit 14 is typically an eight bit byte, although the invention is not so limited. The eight bits of each byte are output in parallel from the data port 26a as signals BO to B7 respectively.

Bits 1 to 7 of the status port 26b are unused in accordance with the present method, whereas a BUSY signal that is generated by the printer 16 is input at bit 8 of the status port 26b and can be used for flow control in a conventional manner.

A negative logic strobe signal STRB is output at bit 1 of the control port 26c. A negative logic initialization signal INIT is output at bit 3, whereas bits 2 and 4 to 8 of the control port 26c are unused.

In accordance with the present method, the computer 12 transmits data to the printer 16 in two different forms depending on whether the data is repeated or non-repeated. Non-repeated data consists of consecutive data elements, in the present case 8-bit bytes, that have different numerical values. Repeated data consists of consecutive bytes that have the same numerical value.

Non-repeated data is transmitted without alteration. However, repeated data is not transmitted per se. Instead, only the first byte of repeated data (the last byte of previously transmitted non-repeated data) is transmitted, and alternating strobe signals are transmitted for the other bytes of the repeated data.

Data to be transmitted from the computer 12 to the printer 16 is stored in the data array 24a of the RAM 24. Under program control, the data array 24a is searched to locate and map blocks of repeated data and non-repeated data. The blocks are output as either data or alternating strobe signals in burst mode depending on the type of data.

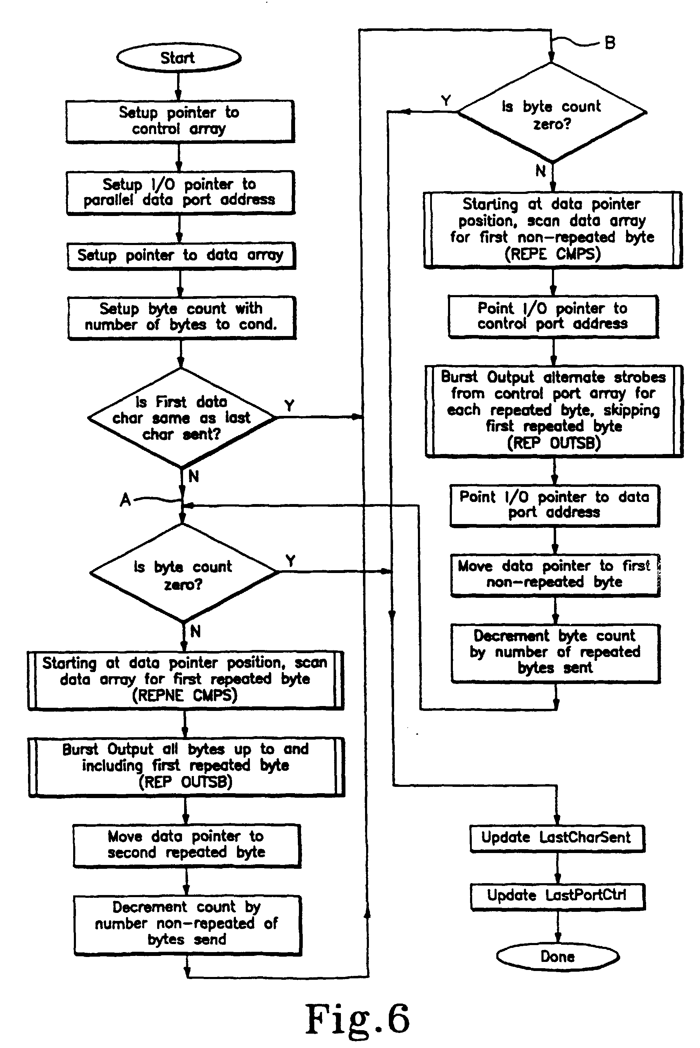

The detailed operation of the present system 10 will be described with reference to the flowchart of FIG. 6.

An operating program that controls the operation of the computer 12 is stored in the main area 24c of the RAM 24. The program first performs an initialization routine that establishes pointers to the required addresses in the system, including the first byte of data in the data array 24a and the first byte of alternating strobe data in the control array 24b. The system I/O address is initially set to the address of the data port 26a of the I/O unit 26 so that data will be output therethrough.

The program then sets up a "BYTE COUNT" that designates the number of bytes to be output in one operation. The BYTE COUNT is selected in accordance with the particular application.

The first byte in the data to be transmitted is compared with the last byte of the data transmitted in the previous operation. If these bytes are different, indicating the beginning of a block of at least two bytes of non-repeated data, the program branches to a point A. If the bytes are the same, indicating the beginning of a block of at least two bytes of repeated data, the program branches to a point B.

For the case of non-repeated data, the program proceeds from the point A to determine if the BYTE COUNT is zero. If so, the program terminates after updating the pointers for the data array 24a and the control array 24b. If not, the data in the array 24a is scanned from the pointer to the first repeated byte.

The next step is to output all bytes from the pointer to and including the first repeated byte as a burst of sequential data. The data is output through the data port 26a and transmitted to the printer 16. Then, the data pointer is set to the address of the second repeated byte and the BYTE COUNT is decremented by the number of bytes that were transmitted. The program then branches to the point B.

Since two repeated data bytes were found, the next operation is to burst output the next block of repeated bytes. The program first checks to see if the BYTE COUNT has been decremented to zero. If so, the program terminates as described above.

If the BYTE COUNT is not zero, the data is scanned starting from the updated pointer to locate the first non-repeated byte. The number of repeated bytes in the block is computed as being equal to the number of bytes from the pointer to the first non-repeated byte.

The system I/O address is then changed to the address of the control port 26c to cause data to be output therethrough. The data stored in the control array 24b consists of a series of bytes having alternating strobe bits. More specifically, bit 1, which is the negative logic strobe bit of the control port 26c, is logically high in the first byte in the array 24b, logically low in the second byte, logically high in the third byte, etc.

A number of sequential bytes equal to the number of repeated bytes in the block that was computed as described above is then output from the control array 24b through the control port 26c as a burst, with the first repeated byte being skipped. During this operation, the strobe signal STRB that is output and transmitted to the adaptor 36 is logically high or low depending on the value of the bit in the respective byte in the control array 24b.

As will be described in detail below, each time the adaptor 36 receives an alternating strobe signal STRB (the logical sense of the signal STRB changes from high to low or from low to high), it transmits the previously received repeated byte to the printer 16. The byte that is transmitted is the last byte of the previously transmitted block of non-repeated data, which was stored in a latch in the adaptor 36 upon termination of the previous operation.

It will be recalled that the last byte of data that is transmitted in a block of non-repeated data is the first byte of subsequent repeated data. This byte is skipped in the subsequent operation of transmitting a block of repeating data. Thus, no bytes are duplicated or omitted.

In this manner, the adaptor 36 repeatedly transmits the same byte of data until the number of bytes that have been transmitted is equal to the number of bytes in the block of repeated data. When the entire block has been transmitted, the system I/O pointer is set to the address of the data port 24a, the data pointer is set to the address of the first non-repeated byte and the BYTE COUNT is decremented by the number of bytes that were transmitted.

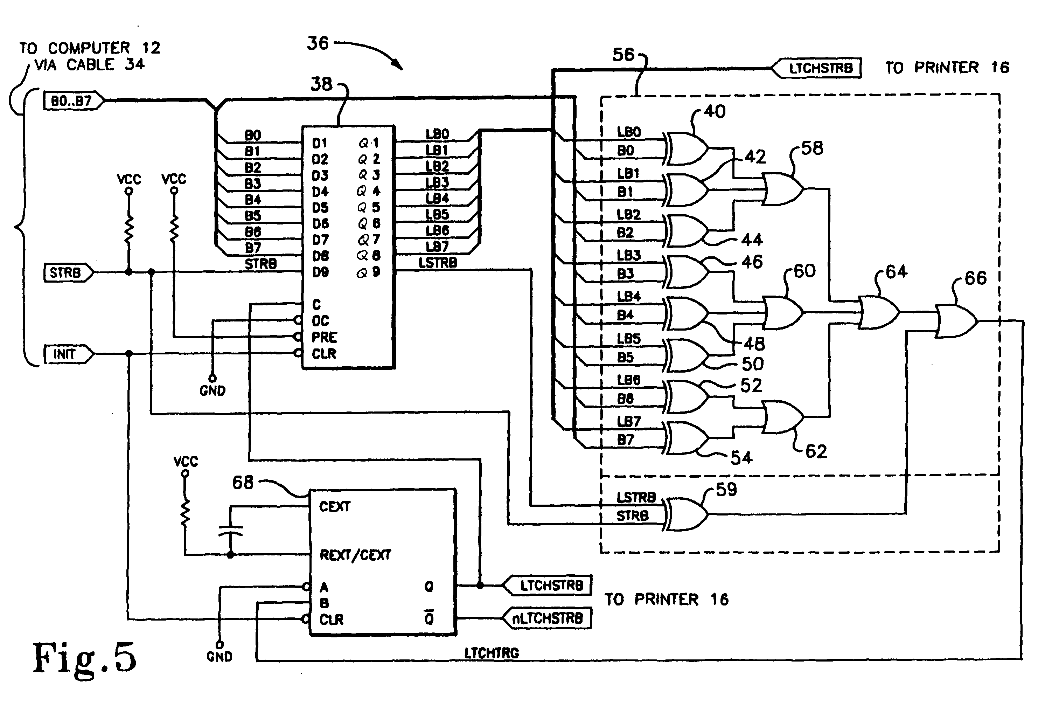

The adaptor 36 is illustrated in FIG. 5, and comprises a transparent data latch 38 having data inputs D1 to D8 that are connected to receive the signals BO to B7 from the data port 26a of the computer 12 respectively. The latch 38 is preferably embodied by a SN74ALS843 9-BIT BUS INTERFACE D-TYPE LATCH WITH 3-STATE OUTPUTS that is commercially available from Texas Instruments.

Signals LBO to LB7 which are latched versions of the signals BO to B7 appear at data outputs Q1 to Q8 of the latch 38 and are applied to inputs of exclusive-OR gates 40 to 54 of a comparator 56. The signals LBO to LB7 are transmitted to the printer 16. The signals BO to B7 are applied to other inputs of the exclusive-OR gates 40 to 54 respectively.

The strobe signal STRB is applied to a data input D9 of the latch 38, and a latched version thereof that is designated as a latched strobe signal LSTRB is output from a data output Q9 of the latch 38. The signals STRB and LSTRB are applied to inputs of an exclusive-OR gate 59.

The outputs of the exclusive-OR gates 40, 42 and 44 are connected to inputs of an OR gate 58, the outputs of the exclusive-OR gates 46, 48 and 50 are connected to inputs of an OR gate 60, whereas the outputs of the exclusive-OR gates 52 and 54 are connected to inputs of an OR gate 62.

The outputs of the OR gates 58, 60 and 62 are connected to inputs of an OR gate 64, the output of which is connected to an input of an OR gate 66. The output of the exclusive-OR gate 59 is connected to another input of the OR gate 66. A compare output or latch trigger signal LTCHTRG appears at the output of the OR gate 66. The comparator 56 is preferably embodied by a PAL22V10 24-PIN TTL VERSATILE PROGRAMMABLE LOGIC DEVICE (PAL) DEVICE that is commercially available from Advanced Micro Devices.

The adaptor 36 further comprises a reset unit in the form of a monostable multivibrator 68 that is preferably embodied by a SN74LS123 RETRIGGERABLE MONOSTABLE MULTIVIBRATOR which is commercially available from Texas Instruments. The multivibrator 68 has a high-level-active B input connected to receive the latch trigger signal LTCHTRG. The latch strobe signal LTCHSTRB signal appears at a Q output of the multivibrator 68 and is applied to a clock input C of the latch 38. The initialization signal INIT is applied to clear inputs CLR of the latch 38 and the multivibrator 68.

The adaptor 36 senses a non-repeated input byte and transmits it to the printer 16. The adaptor 36 also senses a changed strobe signal and transmits the previously latched byte to the printer 16 in response thereto.

More specifically, the comparator 56 compares the data B0 to B7 transmitted from the computer 12 with the data LBO to LB7 at the output of the latch 38. If these data are different, as in the case of non-repeated data, the adaptor 36 latches and outputs the new data to the printer 16.

In the case of repeated data, the data LBO to LB7 will be the same as the data B0 to B7, since the computer 12 will continuously output the same byte. However, the strobe signal STRB will change for each repeated byte. The adaptor 36 latches and outputs the data BO to B7 for each change of the strobe signal STRB.

The exclusive-OR gates 40 to 54 will produce a logically high output whenever the respective inputs are different. In this manner, the signals BO to B7 which represent the data being output by the computer 12 are compared bit by bit with the previously latched signals LB0 to LB7 which represent the previous byte. If any of these bits are different, at least one of the exclusive-OR gates 40 to 54 will produce a high output. Consequently, at least one of the OR gates 58, 60 and 62 will produce a high output, and the OR gate 64 will produce a high output that is fed through the OR gate 66 as the latch trigger signal LTCHTRG.

Similarly, the exclusive-OR gate 59 compares the current strobe signal STRB with the previously latched strobe signal LSTRB and generates a high output when they are different. This causes the OR gate 66 to produce the signal LTCHTRG.

The signal LTCHTRG is applied to the trigger input B of the multivibrator 68, causing the output Q to go logically high for a pulse duration that is selected in accordance with a particular application. A suitable pulse duration for Intel 486 system operation is 200 nanoseconds.

The pulse generated by the multivibrator 68 is the latch strobe signal LTCHSTRB, which is applied to the clock input of the latch 38. This causes the signals BO to B7 and the strobe signal STRB to be latched into the latch 38. The signal LTCHSTRB is also fed to the printer 16 to cause it to input the new data byte represented by the signals LB0 to LB7.

The adaptor 36 is further capable of being reset to a known state. This is accomplished by applying the initialization signal INIT to the clear inputs of the latch 38 and the multivibrator 68. This causes the data LB0 to LB7 and the strobe bit LSTRB in the latch 38 to be set to zero. With the INIT signal held low, the computer 12 can set the data signals B0 to B7 and the strobe signal STRB to low states without transmitting a signal to the printer 16.

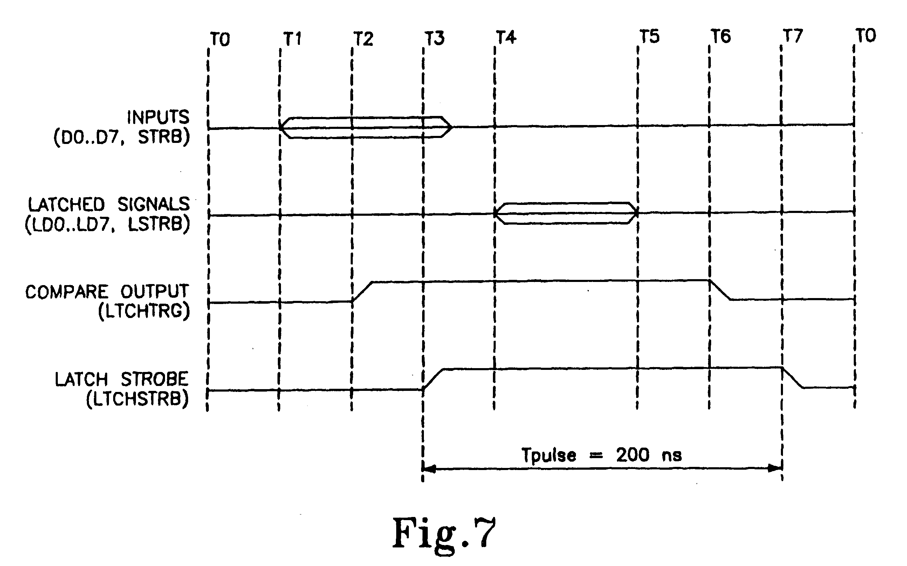

FIG. 7 illustrates the timing of operation of the adaptor 38. At a time TO, the nine inputs (data B0 to B7 and strobe STRB) are in a steady state, and the latched signals LB0 to LB7 and LSTRB have the same values as the corresponding input signals. The adaptor 38 is ready to receive a new byte of data.

At a time T1, either the input data byte or the strobe signal STRB has changed (one of the nine inputs has changed). This causes the latch trigger signal LTCHTRG to go high and trigger the multivibrator 68 at a time T2.

The LTCHTRG signal causes the multivibrator 68 to produce the latch strobe pulse LTCHSTRB for a duration of 200 nanoseconds starting at a time T3. This causes the latch 38 to latch in the data signals BO to B7 and the strobe signal STRB at a time T4.

The input signals B0 to B7 are latched into the latch 38 and the inputs to the comparator 56 become the same at a time T5. This causes the latch trigger signal LTCHTRG to go low at a time T6. The latch strobe signal LTCHSTRB pulse goes low at a time T7.

The operation of scanning the data in the array 24a to determine the number of bytes in a block of repeated data is preferably performed using a COMPARE STRING BY BYTE (CMPSB) instruction in combination with a REPEAT UNTIL NOT EQUAL (RPNE) qualifier that are standard commands in the Intel 386/486 programming language. The number of bytes in a block of non-repeated data is determined in an essentially similar manner using the CMPSB instruction in combination with a REPEAT UNTIL EQUAL (REPE) qualifier.

An exemplary assembly language code fragment for a block of repeated data is as follows.
(1) LDS SI,Ptr1
(2) LES DI,Ptr2
(3) MOV CX,BYTE COUNT
(4) REPNE COMPSB DS:[SI],ES:[DI]

Steps (1) to (3) set up the registers that are required to perform step (4). More specifically, step (1) loads the DATA SEGMENT register DS and the SOURCE INDEX register SI with the address pointed to by Ptrl, which is the address pointer described above with reference to FIG. 6. Step (2) similarly loads the EXTENDED SEGMENT register ES and the DESTINATION INDEX register DI with the address of a pointer Ptr2 which is equal to Ptrl + 1. Step (3) loads the BYTE COUNT into the COUNT register CX.

The REPNE COMPSB instruction in step (4) compares the byte addressed by the pointer Ptrl with the byte addressed by the pointer Ptr2. These bytes are consecutive. The pointers Ptrl and Ptr2 are incremented each time step (4) is performed such that the data in the array 24a starting at the pointer Ptrl is sequentially searched by comparing each two consecutive bytes.

Step (4) is repeated until two non-repeated (different) bytes are found or the CX register is decremented to zero. If a non-match is found, the CX register will contain the number of bytes not scanned and DS:[SI] will point to the first non-repeated byte. The size of the block of repeated data is equal to the initial BYTE COUNT minus the count in the CX register.

An exemplary assembly language code fragment for a block of non-repeated data is as follows.
(1) LDS SI,Ptr1
(2) LES DI,Ptr2
(3) MOV CX,BYTE COUNT
(4) REPE COMPSB DS:[SI],ES:[DI]

Steps (1) to (3) set up the registers that are required to perform step (4) in the same manner as for the case of repeated data.

Step (4) is performed until two repeated (identical) bytes are found or the CX register is decremented to zero. If a match is found, the CX register will contain the number of bytes not scanned, and DS:[SI] will point to the first repeated byte. The size of the block of non-repeated data is equal to the initial BYTE COUNT minus the count in the CX register.

Data is preferably output by the computer 12 using a single program instruction for each byte, more specifically the OUTPUT STRING BY BYTE (OUTSB) with the REPEAT (REP) qualifier. An example of assembly language code for performing data output is as follows.
(1) LDS SI,Prt1
(2) MOV CX,BYTE COUNT
(3) MOV DX,PORT ADDRESS
(4) REP OUTSB

Step (1) loads an address pointer Ptr1 into the DS and SI registers. The pointer Ptr1 points to the first address of the block of data in the data array 24a for outputting a block of non-repeated data, and points to the first address of the block of alternating strobe data in the control array 24b for outputting a block of repeated data.

Step (2) loads the BYTE COUNT, in this case indicating the number of bytes in the block of data to be output, into the CX register.

Step (3) loads the PORT ADDRESS into the DX register. The PORT ADDRESS is the address of the data port 26a for outputting a block of non-repeated data, and the address of the control port 26c for outputting a block of repeated data.

Step (4) performs the actual output operation by outputting consecutive bytes of data until the CX register has been decremented to zero. Upon completion, the DX register will be unaffected and DS:[SI] will point to the address of the byte of data following the last byte of data that was output.

In summary, the present invention enables a byte of data to be output using only one program instruction, and thereby achieves the goal of substantially increasing the rate at which data can be transmitted from the computer 12 to the printer 16.

Various modifications will become possible for those skilled in the art after receiving the teachings of the present disclosure without departing from the scope thereof.

For example, although the adaptor 36 is preferably provided at the peripheral device 14 with the printer 16, it is within the scope of the invention to provide the adaptor 36 at the computer 12 or at an intermediate position in the cable 34.

As another exemplary modification, data can be transmitted serially, rather than in parallel.

## Claims

1. A data transmission system (10) for transmitting a sequence of data elements comprising sequentially repeating and sequentially non-repeating data elements, characterized by:
a transmitter (12) adapted for transmitting the sequence of data elements as sequential blocks alternating between
a sequence of sequentially alternating logically high and low status signals corresponding in number to a number of sequentially repeated data elements within the sequence of data, and
a sequence of sequentially non-repeated data elements corresponding to an identical sequence of non-repeating data elements within the sequence of data elements; and
an adapter (36) adapted for receiving the blocks of status signals and non-repeating data elements and re-transmitting them as the sequence of data elements by re-transmitting each non-repeating data element received in sequence, and sequentially re-transmitting each repeated data element upon receipt of a logically alternate high or low status signal differing from the status signal received previously.

2. A system (10) as in claim 1, further characterized by a receiver (14) which receives the sequence of data elements comprising sequentially repeating and sequentially non-repeating data elements from the adapter (36).

3. A system (10) as in claim 2, characterized in that the transmitter (12) comprises a computer and the receiver comprises a peripheral device (16).

4. A system (10) as in claim 3, characterized in that the peripheral device (16) comprises a printer.

5. A system (10) as in claim 1, characterized in that the adapter (36) includes:
a latch (38) for latching a data element; and
a controller (56) for controlling re-transmission of the latched data element pursuant to receipt of a status signal differing from a previous logically high or low status signal.

6. A system (10) as in claim 5, characterized in that the controller (56) comprises a comparator for sensing a change in the logically high or low status signal received from the transmitter (12) and causes a previously received repeated data element to be transmitted from the latch to the receiver in response to a change in the status signal.

7. A system (10) as in claim 3, characterized in that the controller (56) causes non-repeated data elements to be latched into the latch (38) and transmitted from the latch to the receiver.

8. A system (10) as in claim 7, characterized, in that the controller (56) comprises a comparator adapted for sensing if a data element received from the transmitter (12) is repeated or non-repeated, and which causes non-repeated data elements to be latched into the latch (38) and transmitted from the latch to the receiver (14) based on said serving.

9. A system (10) as in claim 1, characterized in that the transmitter (12) comprises:
a data element memory (24) adapted for storing said sequence of data elements; and
a controller (20) adapted for determining the length of a of reported data elements within said sequence of data elements and generating a sequence of non-repeating logically high and low status signals corresponding to said sequence of repeated data elements and transmitting the alternating logically high and low status signals to the adapter (36) as a block.

10. A system (10) as in claim 9, characterized in that the controller (20) determines the length of a sequence of non-repeated data elements within said sequence of data elements in the data element memory (24) and transmits this sequence of non-repeated data elements within the sequence of data elements to the adapter (36) as a block.

11. A system (10) as in claim 9, characterized in that:
the transmitter (12) further comprises a status signal memory (24b) adapted for storing a series of logically high or low status signals; and
the controller (20) reads out and transmits a sequence of non-repeating logically high and low status signals containing a number of signals equal to the number of signals in said block of alternating logically high and low status signals corresponding to the number of repeated data elements in the sequence of repeated data element within said sequence of data elements stored in the data element memory (24).

12. A system (10) as in claim 1, characterized in that the status signals comprise strobe signals.

13. A system (10) as in claim 1, characterized in that the adapter (36) further comprises:
a latch (38) adapted for latching a previously received data element; and
a controller (56) adapted for repeatedly re-transmitting a previously received data element from the latch upon receipt of a logically alternate high or low status signal different from the previously received status signal.

14. A system (10) as in claim 13, characterized in that the controller (56) comprises a comparator for sensing a change in the logically high or low status signal received from the transmitter (12).

15. A system (10) as in claim 13, characterized in that the controller (56) causes non-repeated data elements to be latched into the latch (38) and transmitted from the latch to the receiver.

16. A system (10) as in claim 15, characterized in that the controller (56) comprises a comparator adapted for sensing when a data element received is different from that received in sequence immediately prior, and which causes such non-repeated data elements to be latched into the latch (38) and retransmitted from the latch.

17. A system (10) as in claim 1, characterized in that the transmitter transmits a sequence of status signals logically alternately high and low corresponding to a sequence of repeated data elements, and a previously transmitted data element is repeatedly transmitted a number of times in sequence corresponding to the number of alternately high and low status signals transmitted.

18. A system (10) as in claim 17, characterized in that non-repeated data elements are retransmitted.

19. A system (10) as in claim 17, characterized in that when a previously transmitted data element is repeatedly transmitted, the previously transmitted data element is latched in a latch (38) and repeatedly transmitted from the latch each time the status signal changes from logically low to logically high or logically low to logically high.

20. A system (10) as in claim 19, characterized in that the status signal is determined to be logically high or logically low upon receipt thereof.

## Patentansprüche

1. Datenübertragungssystem (10) zum Übertragen einer Reihe von Datenelementen, bestehend aus aufeinanderfolgenden, sich wiederholenden und sequentiell einmaligen Datenelementen, dadurch gekennzeichnet, dass
ein Sender (12), der zum Übertragen einer Reihe von Datenelementen ausgeführt ist, die sich als sequentielle Blöckezwischen
einer Reihe sequentiell abwechselnder logischer Eins- und logischer Null-Statussignale abwechseln und die in ihrer Anzahl mit der Anzahl sequentiell wiederholter Datenelemente in der Datenreihe übereinstimmen und
eine Reihe sequentiell einmaliger Datenelemente, die einer identischen Folge einmaliger Datenelemente in der Reihe von Datenelementen entspricht und
ein Adapter (36), der zum Empfangen der Blöcke von Statussignalen und einmaliger Datenelemente sowie zum weiteren Übertragen als einer Reihe von Datenelementen durch Weiterübertragung jedes eingegangenen einmaligen Datenelements in der erhaltenen Reihenfolge sowie zum sequentiellen Weiterübertragen jedes wiederholten Datenelements nach dem Empfang eines abwechselnden logischen Eins- oder Null-Statussignals ausgeführt ist, das vom vorher empfangenen Statussignal abweicht.

2. System (10) nach Anspruch 1, weiter gekennzeichnet durch einen Empfänger (14), der die Reihe von Datenelementen empfängt, die sich aus sequentiell wiederholenden und sequentiell einmaligen Datenelementen aus dem Adapter (36) zusammensetzt.

3. Das System 10 nach Anspruch 2, dadurch gekennzeichnet, dass der Sender (12) einen Rechner und der Empfänger ein Peripheriegerät (16) darstellt.

4. A system (10) as in claim 3, characterized in that the peripheral device (16) comprises a printer.System (10) nach Anspruch 3, dadurch gekennzeichnet, dass das Peripheriegerät (16) einen Drucker darstellt.

5. System (10) nach Anspruch 1, dadurch gekennzeichnet, dass der Adapter (36) folgendes urnfasst
einen Signalspeicher (38) zum Speichern eines Datenelements und
eine Steuerung (56) zum Regeln der Weiterübertragung des gespeicherten Datenelements nach Empfang eines Statussignals, das sich vom vorherigen logischen Eins- oder Null-Statussignal unterscheidet.

6. System (10) nach Anspruch 5, dadurch gekennzeichnet, dass die Steuerung (56) einen Komparator zum Erkennen einer Veränderung des vom Sender (12) empfangenen logischen Eins- oder Null-Statussignals enthält, der, ansprechend auf eine Veränderung des Statussignals, ein Übertragen eines vorher empfangenen wiederholten Datenelements aus dem Signalspeicher an den Empfänger herbeiführt.

7. System (10) nach Anspruch 5, dadurch gekennzeichnet, dass die Steuerung (56) das Speichern einmaliger Datenelemente in einem Signalspeicher (38) und das Übertragen dieser aus dem Signalspeicher zum Empfänger bewirkt.

8. System (10) nach Anspruch 7, dadurch gekennzeichnet, dass die Steuerung (56) einen Komparator beinhaltet, der zum Erkennen dessen ausgelegt ist, ob ein vom Sender (12) empfangenes Signal wiederholt oder einzigartig ist und der das Speichern einmaliger Datenelemente in dem Signalspeicher (38) sowie, ansprechend auf die o.g. Erkennung, das Übertragen aus diesem an den Empfänger herbeiführt.

9. System (10) nach Anspruch 1, dadurch gekennzeichnet, dass der Sender (12) folgendes umfasst: einen Datenelementspeicher (24), ausgelegt zum Speichern der erwähnten Reihe von Datenelementen; eine Steuerung (20), ausgelegt zum Feststellen der Länge einer Reihe von wiederholten Datenelementen in der erwähnten Reihe von Datenelementen und zum Erzeugen einer Reihe einmaliger logischer Eins- oder Null-Statussignale, die der erwähnten Reihe von wiederholten Datenelementen entspricht sowie zum Übertragen der abwechselnden logischen Eins- und Null-Statussignale als Block an den Adapter (36).

10. System nach Anspruch (10), dadurch gekennzeichnet, dass die Steuerung (20) die Länge der Reihe einmaliger Datenelemente in der erwähnten Reihe von Datenelementen im Datenelementspeicher (24) feststellt und diese Reihe einmaliger Datenelemente in der Reihe von Datenelementen als Block an den Adapter (36) überträgt.

11. System nach Anspruch 9, dadurch gekennzeichnet, dass der Sender (12) weiter einen Statussignalspeicher (24b) umfasst, der zum Speichern einer Reihe von logischen Eins- oder Null-Statussignalen ausgelegt ist und die Steuerung (20) eine Reihe einmaliger logischer Eins- und Null-Statussignale herausliest und überträgt, die eine Anzahl von Signalen enthält, die der Anzahl von Signalen im erwähnten Block abwechselnder logischer Eins- und Null-Statussignale entspricht und die der Anzahl wiederholter Datenelemente in der Reihe wiederholter Datenelemente in der erwähnten Reihe der im Datenelementspeicher (24) gespeicherten Datenelemente entspricht.

12. System (10) nach Anspruch 1, dadurch gekennzeichnet, dass die Statussignale Freigabesignale sind.

13. System (10) nach Anspruch 1, dadurch gekennzeichnet, dass der Adapter (36) weiter folgendes umfasst:
einen Signalspeicher (38), der zum Speichern vorher empfangener Datenelemente ausgelegt ist und eine Steuerung (56), die nach dem Empfang zum wiederholten Weiterübertragen eines abwechselnden logischen Eins- oder Null-Statussignals ausgelegt ist, das sich vom vorher empfangenen Statussignal eines vorher empfangenen Datenelements aus dem Signalspeicher unterscheidet.

14. System (10) nach Anspruch 13, dadurch gekennzeichnet, dass die Steuerung (56) einen Komparator zum Erkennen einer Veränderung des vom Sender (12) empfangenen logischen Eins- oder Null-Statussignals umfasst.

15. System (10) nach Anspruch 13, dadurch gekennzeichnet, dass die Steuerung (56) das Speichern einmaliger Datenelemente in einem Signalspeicher (38) und das Übertragen dieser aus dem Signalspeicher an den Empfänger bewirkt.

16. System (10) nach Anspruch 15, dadurch gekennzeichnet, dass die Steuerung (56) einen Komparator beinhaltet, der zum Erkennen dessen ausgelegt ist, ob ein vom Sender (12) empfangenes Signal sich vom unmittelbar davor in der Reihe empfangenen unterscheidet und der weiter dahingehend ausgelegt ist, das Speichern solcher einmaliger Datenelemente in dem Signalspeicher (38) sowie das Übertragen aus diesem herbeizuführen.

17. System (10) nach Anspruch 1, dadurch gekennzeichnet, dass der Sender eine Reihe von logisch abwechselnden Eins- und Null-Signalen überträgt, die einer Reihe wiederholter Datenelemente entspricht, wobei ein vorher übertragenes Datenelement mehrmals wiederholt in einer Reihenfolge übertragen wird, die der Anzahl der abwechselnden übertragenen Eins- und Null-Statussignale entspricht.

18. System (10) nach Anspruch 17, dadurch gekennzeichnet, dass die einmaligen Datenelemente weiter übertragen werden.

19. System (10) nach Anspruch 17, dadurch gekennzeichnet, dass ein vorher übertragenes Datenelement wiederholt übertragen wird, während das vorher übertragene Datenelement in einem Signalspeicher (38) gespeichert und jedesmal dann wieder daraus übertragen wird, wenn das Statussignal von logisch Eins auf logisch Null oder umgekehrt wechselt.

20. System (10) nach Anspruch 19, dadurch gekennzeichnet, dass die Statussignale nach ihrem Empfang als logisch Eins oder logisch Null erkannt werden.

## Revendications

1. Un système de transmission de données (10) pour transmettre une séquence d'éléments de données englobant des éléments de données à répétition séquentielle et à non répétition séquentielle, caractérisé par :
un émetteur (12) adapté pour l'émission de la séquence d'éléments de données en tant que blocs séquentiels alternant entre
une séquence de signaux à l'état logique haut et à l'état logique bas alternant séquentiellement, dont le nombre correspond à un nombre d'éléments de données répétées séquentiellement au sein de la séquence de données, et
une séquence d'éléments de données non répétées séquentiellement qui correspondent à une séquence identique d'éléments de données non répétés au sein de la séquence d'éléments de données ; et
un adaptateur (36) adapté pour recevoir les blocs de signaux d'état et les éléments d'état non répétés et pour les retransmettre comme la séquence des éléments de données en retransmettant chaque élément de données non répété reçu en séquence et en retransmettant séquentiellement chaque élément de données répété sur réception d'un signal alternativement à l'état haut ou bas qui diffère du signal d'état reçu précédemment.

2. Un système (10) selon la revendication 1, caractérisé de plus par un récepteur (14) qui reçoit la séquence d'éléments de données englobant des éléments de données séquentiellement répétés et séquentiellement non répétés émis par l'adaptateur (36).

3. Un système (10) selon la revendication 2, caractérisé en ce que l'émetteur (12) englobe un ordinateur et le récepteur englobe un périphérique (16).

4. Un système (10) selon la revendication 3, caractérisé en ce que le périphérique (16) englobe une imprimante.

5. Un système (10) selon la revendication 1, caractérisé en ce que l'adaptateur (36) englobe :
une bascule (38) pour mémoriser un élément de données ; et
un régisseur (56) pour gérer la retransmission de l'élément de données mémorisé suite à la réception d'un signal d'état qui diffère d'un signal d'état précédent à l'état logique haut ou bas.

6. Un système (10) selon la revendication 5, caractérisé en ce que le régisseur (56) englobe un comparateur qui détecte un changement du signal d'état à l'état logique haut ou bas reçu depuis l'émetteur (12) et fait transmettre un élément de données répété reçu précédemment depuis la bascule jusqu'au récepteur en réponse à un changement du signal d'état.

7. Un système (10) selon la revendication 5, caractérisé en ce que le régisseur (56) fait mémoriser des éléments de données non répétés dans la bascule (38) et les fait transmettre depuis la bascule jusqu'au récepteur.

8. Un système (10) selon la revendication 7, caractérisé en ce que le régisseur (56) englobe un comparateur adapté pour détecter si un élément de données reçu depuis l'émetteur (12) est répété ou non répété, et qui fait mémoriser des éléments de données non répétés dans la bascule (38) et les fait transmettre depuis la bascule jusqu'au récepteur (14) sur la base de ladite détection.

9. Un système (10) selon la revendication 1, caractérisé en ce que l'émetteur (12) englobe :
une mémoire d'éléments de données (24) adaptée pour mémoriser ladite séquence d'éléments de données ; et
un régisseur (20) adapté pour déterminer la longueur d'une séquence d'éléments de données répétés au sein de ladite séquence d'élément de données et pour générer une séquence de signaux d'état non répétés à l'état logique haut ou bas qui correspondent à ladite séquence d'éléments de données répétés, et pour transmettre les signaux d'état alternativement aux niveaux logiques haut et bas à l'adaptateur (36) sous forme d'un bloc.

10. Un système (10) selon la revendication 9, caractérisé en ce que le régisseur (20) détermine la longueur d'une séquence d'éléments de données non répétés au sein de ladite séquence d'éléments de données dans la mémoire d'éléments de données (24) et transmet cette séquence d'éléments de données non répétés au sein de la séquence d'éléments de données à l'adaptateur (36) sous forme d'un bloc.

11. Un système (10) selon la revendication 9, caractérisé en ce que :
l'émetteur (12) englobe de plus une mémoire de signaux d'état (24b) adaptée pour mémoriser une série de signaux d'état à l'état logique haut ou bas ; et
le régisseur (20) extrait et transmet une séquence de signaux d'état non répétés à l'état logique haut et bas qui contiennent un nombre de signaux égal au nombre de signaux dans ledit bloc de signaux d'état à l'état logique alternativement haut et bas qui correspondent au nombre d'éléments de données répétés dans la séquence d'éléments de données répétés au sein de ladite séquence d'éléments de données mémorisés dans la mémoire d'éléments de données (24).

12. Un système (10) selon la revendication 1, caractérisé en ce que les signaux d'état englobent des signaux d'échantillonnage.

13. Un système (10) selon la revendication 1, caractérisé en ce que l'adaptateur (36) englobe de plus :
une bascule (38) adaptée pour mémoriser un élément de données reçu précédemment ; et
un régisseur (56) adapté pour retransmettre répétitivement un élément de données reçu précédemment depuis la bascule sur réception d'un signal d'état à état logique alternativement haut ou bas qui diffère du signal d'état reçu précédemment.

14. Un système (10) selon la revendication 13, caractérisé en ce que le régisseur (56) englobe un comparateur pour détecter un changement dans le signal d'état à état logique haut ou bas émis par l'émetteur (12).

15. Un système (10) selon la revendication 13, caractérisé en ce que le régisseur (56) fait mémoriser des éléments de données non répétés dans la bascule (38) et les fait transmettre depuis la bascule jusqu'au récepteur.

16. Un système (10) selon la revendication 15, caractérisé en ce que le régisseur (56) englobe un comparateur adapté pour capter lorsqu'un élément de données reçu diffère de celui qui est reçu immédiatement avant dans la séquence, et qui fait mémoriser ces éléments de données non répétés dans la bascule (38) et les fait retransmettre depuis la bascule.

17. Un système (10) selon la revendication 1, caractérisé en ce que l'émetteur émet une séquence de signaux d'état à état logique alternativement haut et bas qui correspondent à une séquence d'éléments de données répétés, et un élément de données précédemment transmis est transmis répétitivement à plusieurs reprises en une séquence qui correspond au nombre de signaux d'état alternativement haut et bas transmis.

18. Un système (10) selon la revendication 17, caractérisé en ce que les éléments de données non répétés sont retransmis.

19. Un système (10) selon la revendication 17, caractérisé en ce que, lorsqu'un élément de données transmis précédemment est transmis répétitivement, l'élément de données transmis précédemment est mémorisé dans une bascule (38) et transmis répétitivement depuis la bascule chaque fois que le signal d'état passe d'un état logique bas à un état logique haut ou d'un état logique bas à un état logique haut.

20. Un système (10) selon la revendication 19, caractérisé en ce que le signal d'état est déterminé comme étant à l'état logique haut ou à l'état logique bas au moment de sa réception.
